# EUROPEAN PATENT SPECIFICATION

(11) **EP 1 836 260 B1**
(45) Date of publication and mention of the grant of the patent: **26.11.2008**
(21) Application number: 05822797.6
(22) Date of filing: 22.12.2005
(51) Int. Cl.: C08L 83/04, C08L 63/00, C08J 5/12, B32B 25/20, B32B 27/38

(54) **BONDED COMPOSITE OF SILICONE RESIN AND EPOXY RESIN AND A METHOD FOR MANUFACTURING THEREOF**
VERKLEBTER VERBUND AUS SILIKONHARZ UND EPOXIDHARZ UND HERSTELLUNGSVERFAHREN DAFÜR
COMPOSITE COLLE DE RESINE DE SILICONE ET DE RESINE EPOXYDE ET PROCEDE SERVANT A FABRIQUER CELUI-CI

(30) Priority: 27.12.2004 JP 2004378194
(43) Date of publication of application: 26.09.2007
(73) Proprietor: Dow Corning Toray Co., Ltd., Tokyo 100-0005 (JP)
(72) Inventor: NAKASHIMA, Hisataka, Shizuoka-shi, Shizuoka, 422-8002 (JP); KOBAYASHI, Hideki, 2900075 (JP)
(74) Representative: Gillard, Richard Edward
(86) International application number: PCT/JP2005/024196
(87) International publication number: WO 2006/070903

(56) References cited:
- US-A- 5 618 631
- US-A- 5 714 265
- US-A- 5 859 127
- PATENT ABSTRACTS OF JAPAN vol. 1996, no. 11, 29 November 1996 (1996-11-29) & JP 08 176447 A (TORAY DOW CORNING SILICONE CO LTD), 9 July 1996 (1996-07-09)

## Description

### Technical Field

The present invention relates to a bonded composite of a silicone resin and an epoxy resin, and a method for manufacturing thereof. More specifically, the present invention relates to a firmly bonded composite of a silicone resin and an epoxy resin that may be useful in the field of electronic and electrical devices, office automation equipment, precision instruments, or the like. The invention also relates to a reliable and simplified method for manufacturing such composite.

### Background of the Invention

In the present time, epoxy resins are widely used in electric and electronic industries due to their mechanical strength, a favorable thermal expansion coefficient, and high reliability. On the other hand, curable silicone resins are also used in the above industries due to their resistance to heat and low temperatures, transparency, resistance to ultraviolet rays, etc. Especially, much interest is drawn to optical applications of curable silicone resins that possess high hardness in combinations with high transparency. JP Tokukai 2004-43815(Feb 12, 2004) discloses a curable silicone composition which forms a transparent cured material having no tackiness on the surface.

However, normally silicone resins and organic resins, such as epoxy resins, cannot be easily bonded to each other. To obtain such bonded composite of a silicone resin and an epoxy resin for use in electric, electronic, or optical devices, various methods were proposed to improve their adhesive properties by introducing special additives into the aforementioned organic or silicone resins. For example, US patent 5714265 (Feb 3, 1998) discloses the preparation of a monolithically integrated composite cured body consisting of a part of cured silicone rubber composition and a part of a silicone-epoxy resin composition firmly bonded together by appropriately selecting a silicone resin and a polymer blend of epoxy resins. Furthermore, Eurpean Patent Publication 1002834 (May 24, 2000) discloses that a composite firmly bonded to organic resins by using a silicone rubber composition comprising a silatrane derivative. However, a firmly bonded composite of silicone resin and epoxy resin that can be obtained by merely curing a silicone resin and an epoxy resin maintained in tight contact with each other remains a problem.

### Summary of the Invention

It is an object of the present invention is to provide a firmly bonded composite of silicone resin and epoxy resin, and a reliable and simplified method for manufacturing such a composite.

The present invention relates to:
[1] A bonded composite of a silicone resin and an epoxy resin comprising:
   (A) a curable silicone resin composition comprising:
      100 parts by weight of (A1) an organopolysiloxane resin that has a refractory index at 25°C within the range of 1.45 to 1.60 and contains at least two silicon-bonded alkenyl groups having 2 to 12 carbon atoms, and no less than 30 mole percent of total siloxane units is phenylsiloxane units represented by the following formula: C₆H₅-SiO_{3/2}, (A2) an organopolysiloxane that contains at least two silicon-bonded hydrogen atoms {in an amount such that the ratio of the mole number of silicon-bonded hydrogen atoms of (A2) to the mole number of alkenyl groups in (A1) is within the range of 0.1 to 3.0}, and (A3) hydrosilylation catalyst, and
      (B) a curable epoxy resin composition comprising:
         100 parts by weight of (B1) an epoxy resin that contains at least two epoxy groups in one molecule,
         10 to 200 parts by weight of (B2) a curing agent, and
         0.001 to 10 parts by weight of (B3) a curing catalyst.
[2] A bonded composite of a silicone resin and an epoxy resin comprising:
   100 parts by weight of (A1) an organopolysiloxane resin that has a refractory index at 25°C within the range of 1.45 to 1.60 and contains at least two silicon-bonded alkenyl groups having 2 to 12 carbon atoms, and no less than 30 mole percent of total siloxane units is phenylsiloxane units represented by the following formula: C₆H₅-SiO_{3/2}, (A2) an organopolysiloxane that contains at least two silicon-bonded hydrogen atoms {in an amount such that the ratio of the mole number of silicon-bonded hydrogen atoms of (A2) to the mole number of alkenyl groups in (A1) is within the range of 0.1 to 3.0}, (A3) hydrosilylation catalyst, and
   0.1 to 10 parts by weight of (A4) a polyorganosiloxane that contains at least two silicon-bonded alkenyl groups, at least one group of formula OR¹ (where R¹ is an hydrogen atom or a univalent hydrocarbon group having one to three carbon atoms), and at least one group selected from epoxy group, methacryloxy group, or acryloxy group, and (B) a curable epoxy resin composition comprising:
      100 parts by weight of (B1) an epoxy resin that contains at least two epoxy groups in one molecule,
      10 to 200 parts by weight of (B2) a curing agent, and
      0.001 to 10 parts by weight of (B3) a curing catalyst.
[3] The bonded composite of a silicone resin and an epoxy resin according to [1] or [2] wherein the number of said silicon-bonded alkenyl groups of component (A1) is three or more and wherein the number of carbon atoms of the alkenyl group is 3 to 12.
[4] The bonded composite of a silicone resin and an epoxy resin according to any of [1] to [3] wherein the Type D durometer hardness in compliance with Japanese Industrial Standard K 7215 of the cured body of said curable silicone resin composition (A) is equal to or exceeds 40.
[5] A method for manufacturing the bonded composite of a silicone resin and an epoxy resin according to [1] or [2], wherein either one of said curable silicone resin composition (A) or said curable epoxy resin composition (B) is cured at room temperature or with heating and then the other of said compositions is loaded in tight contact with each other and cured at room temperature or with heating.
[6] A method for manufacturing the bonded composite of a silicone resin and an epoxy resin according to [1] or [2], wherein said curable silicone resin composition (A) and said curable epoxy resin composition (B) are loaded in tight contact with each other and cured together at room temperature or with heating.

The present invention solves the problems of the prior art and provides a firmly bonded composite of a silicone resin and an epoxy resin, and a reliable and simplified method for manufacturing thereof.

### Best Mode for Carrying Out the Invention

The invention will be further described in detail.
The curable silicone resin composition (A) used for manufacturing the bonded composite of the present invention is a curable silicone resin composition that is crosslinked and cured via hydrosilation reaction between silicon-bonded alkenyl groups of component (A1) and silicon-bonded hydrogen atoms of component (A2), under the catalytic action of a component (A3). Alternatively, resin composition (A) may be a curable silicone resin composition that is crosslinked and cured via hydrosilation reaction between silicon-bonded alkenyl groups of component (A1) and component (A4), silicon-bonded hydrogen atoms of component (A2), under the catalytic action of a component (A3).

Component (A1) is an organopolysiloxane resin which is one of the main components of curable silicone resin composition (A) and contains at least two silicon-bonded alkenyl groups having 2 to 12 carbon atoms in one molecule. No less than 30 mole % of all siloxane units of this component is phenylsiloxane units represented by the following formula: C₆H₅SiO_{3/2}. The silicon-bonded alkenyl groups having 2 to 12 carbon atoms in component (A1) may be represented by vinyl, allyl, butenyl, pentenyl, hexenyl, heptenyl, octenyl, nonenyl, decenyl, undecenyl or dodecenyl group. Alkenyl groups having 3 to 12 carbon atoms are preferred and most preferable one is hexenyl groups. Furthermore, at least two and preferably more than three such alkenyl groups can be contained in one molecule of component (A1). These alkenyl groups of component (A1) may be of one type or it may be comprised of two or more types.

The phenylsiloxane units of component (A1) represented by the formula C₆H₅SiO_{3/2} should exceed 30 mole percent, preferably 50 mole percent of the total amount of siloxane units. Other siloxane units may be those that contain methyl, ethyl, propyl, butyl groups, or the like. Aforementioned component (A1) should have a refractory index at 25°C within the range of 1.45 to 1.60. If the refractory index of this component is below 1.45, it will be difficult to obtain a cured body with an appropriate Type-D durometer hardness, and the brittleness of the cured composite will be increased. Furthermore, it is preferred that the weight-average molecular weight of component (A1) is within the range of 200 to 80,000, and more preferably between 300 and 20,000. Component (A1) may contain aforementioned organopolysiloxane resin of one type or a mixture of two or more types thereof. At a temperature of 25°C, component (A1) may be liquid or solid.

Component (A1) may be a organopolysiloxane resin represented by the following average molecular formulae, where Me designates a methyl group, Et designates a ethyl group, Ph designates a phenyl group, Vi designates a vinyl group, and Hex designates a hexenyl group:

(PhSiO_{3/2})₇(Me₂SiO_{2/2})(CH₂=CHC₄H₈MeSiO_{2/2})₂

(PhSiO_{3/2})₅(Me₂SiO_{2/2})₃(CH₂=CHC₄H₈MeSiO_{2/2})₂

(PhSiO_{3/2})₆(Me₂SiO_{2/2})₂(HexMeSiO_{2/2})₂

(PhSiO_{3/2})₈(HexMeSiO_{2/2})₂

(PhSiO_{3/2})₁₂(Me₂SiO_{2/2})₅(ViMeSiO_{2/2})₃

(PhSiO_{3/2})₇(ViMe₂SiO_{1/2})₃

(phSiO_{3/2})₁₅(HexMeSiO_{2/2})₅

Such components (A1) can be manufactured, e.g., by the method described in JP Tokukai 2004-43815.

Component (A2) is the cross-linking agent for component (A1) and component (A4). Such Component (A2) is a polyorganohydrogensiloxane that has at least two silicon-bonded hydrogen atoms in one molecule. The composition (A) can be cured via hydrosilation reaction between silicon-bonded hydrogen atoms of (A2) with the alkenyl groups of component (A1) and component (A4). Component (A2) should contain in its molecule at least two, and preferably at least three silicon-bonded hydrogen atoms in one molecule. The silicon-bonded organic groups present in Component (A2) may be represented by methyl, ethyl, propyl, butyl, other alkyl, or phenyl groups. Methyl and phenyl groups are preferred. Component (A2) may have a weight-average molecular weight within the range of 100 to 20,000, preferably between 200 to 7,000. For better miscibility with component (A1), it is preferred that at room temperature, component (A2) is a liquid. From the point of view of hardness of a cured body obtained from the curable silicone resin composition (A), it is preferred that component (A2) have a molecular structure between being branched and resinous. Component (A2) used in a curable silicone resin composition (A) may be of one type or it may be comprised of a mixture of two or more types.

Component (A2) can be represented by the following average molecular formulae:

(Me₂HSiO_{1/2})₆(PhSiO_{3/2})₄

(Me₂HSiO_{1/2})₅(PhSiO_{3/2})₅

(Me₂HSiO_{1/2})₄(PhSiO_{3/2})₆

(Me₂HSiO_{1/2})₄(MePhSiO_{2/2})₂(SiO_{4/2})₂ and

(Me₂HSiO_{1/2})₆(MePhSiO_{2/2})₂(SiO_{4/2})₂

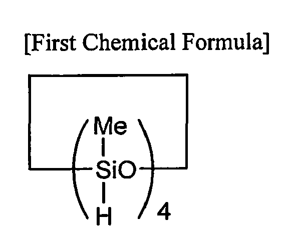

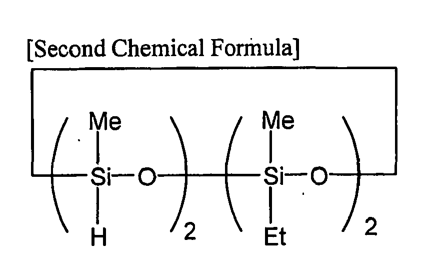

Among these components (A2), those that have three-functional or four-functional components can be manufactured, e.g., by adding in a dropwise manner an alkylsilicate to a mixture of a hydrochloric acid aqueous solution of a specific concentration and an organic silicon compound such as 1,1, 3, 3-tetramethyldisiloxane, dimethylchlorosilane, dimethylalkoxysilane, etc. The average molecular weight of the silicone resin can be freely controlled by the amount of the dropwise-added alkylsilicate, whereby component (A2) with a desired molecular weight can be produced. Component (A2) shown above (formula 2) can be produced by causing a reaction between acetylene and a cyclic polysiloxane compound that contains silicon-bonded hydrogen atoms.

Component (A2) is used in such an amount that the ratio of the mole number of the silicon-bonded hydrogen atoms of component (A2), to the mole number of alkenyl groups in component (A1), is within the range of 0.1 to 3.0, preferably within the range of 0.5 to 2.0. If the amount of component (A2) is below 0.1, the silicone resin composition (A) will be insufficiently cured. If component (A2) is used in an amount exceeding 3.0, this will impair adhesion of a cured body of a curable silicone resin composition to a cured body of a epoxy resin composition (B).

Component (A3) is the catalyst that promotes the hydrosilation reaction between the alkenyl groups of component (A1) and the silicon-bonded hydrogen atoms of component (A2), i.e., component (A3) promotes a cross-linking reaction between components (A1) and (A2), and hence, it provides for curing of the curable resin composition (A). Component (A3) can be a platinum group metal such as ruthenium, rhodium, palladium, osmium, iridium, or platinum per se, or compounds of these metals that possess a catalytic activity with regard to a hydrosilation reaction between alkenyl groups and silicon-bonded hydrogen atoms. Preferred for component (A3) are platinum type catalysts, such as platinum black, platinum on a fine-powdered carbon black carrier, platinum on a fine-powdered silica carrier, chloroplatinic acid, an alcohol solution of a chloroplatinic acid, a platinum-olefin complex, a divinyl-tetramethyldisiloxane complex of a chloroplatinic acid, a divinyl-tetramethyldisiloxane complex of platinum, and thermoplastic resin powders that contain platinum-group metals. Component (A3) should be used in a catalytic amount, preferably in an amount of 0.1 to 1,000 ppm of the pure metal contained in component (A3), per total amount of silicone resin composition (A). If used in an amount of less than 0.1 ppm, curing is delayed. Use of the catalyst in an amount exceeding 1,000 ppm will not noticeably improve curability, and is economically unjustifiable.

Component (A4) is used for improving adhesiveness between a silicone resin and an epoxy resin. Component (A4) is comprised of a polyorganosiloxane that contains at least two silicon-bonded alkenyl groups, at least one group of formula OR¹ (where R¹ is an hydrogen atom or a univalent hydrocarbon group having one to three carbon atoms), and at least one group selected from epoxy group, methacryloxy group, or acryloxy group. It is preferred that component (A2) have a linear, branched molecular or resinous structure. The liner structure is most preferable for easier handling. Component (A4) can be represented by the following average molecular formulae: 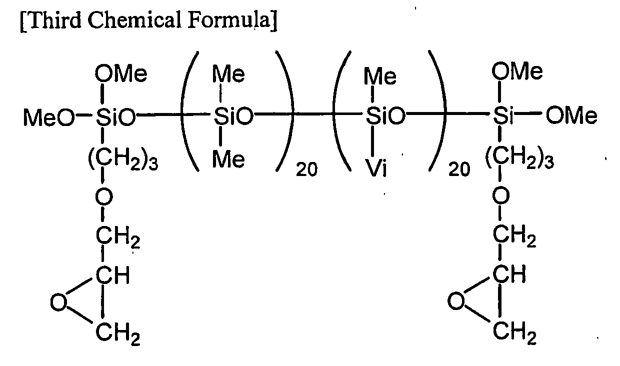 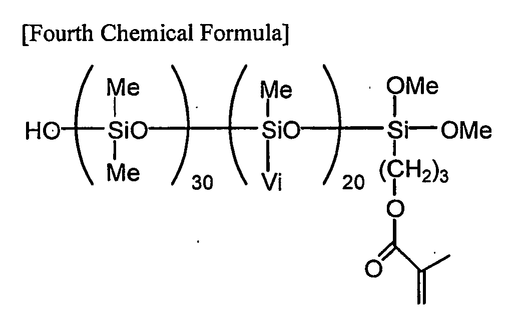 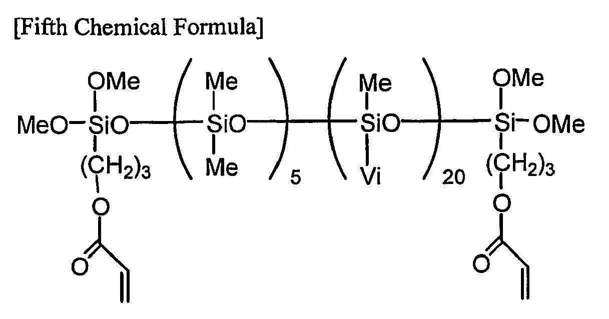 It is recommended that component (A4) is used in an amount of 0.1 to 10 parts by weight, more preferably 0.5 to 5 parts by weight per 100 parts by weight of component (A1). If used in an amount less than 0.1 parts by weight, it would be difficult to provide improved adhesiveness between a silicone resin and an epoxy resin. Use of component (A4) in an amount exceeding 10 parts by weight will be difficult to provide curable resin composition (A) with sufficient hardness and physical strength by decreasing its cross-linking density.

Components (A1) to (A3) are necessary components, and component (A4) is preferable component of a curable silicone resin composition (A). However, in order to improve the storage stability and handling of composition (A) in processes, composition (A) may also incorporate a hydrosilation reaction inhibitor. Such hydrosilation reaction inhibitor can be a compound such as 3-methyl-1-butyn-3-ol; 3,5-dimethyl-1-hexyn-3-ol; 2-phenyl-3-butyn-2-ol; or similar alkyne alcohol; 3-methyl-3-pentene-1-yne; 3,5-dimethyl-3-hexene-1-yne; or other acetylenic hydrocarbons; or other ethylenic hydrocarbons; 1,3,5,7-tetramethyl-1,3,5,7-tetrahexenyl cyclotetrasiloxane; 1,3,5,7-tetramethyl-1,3,5,7-tetrahexanyl cyclotetrasiloxane; or benzotriazole. Hydrosilation reaction inhibitors should be used in an amount that inhibits curing of composition (A) at room temperature, but that allows curing with heating. It is preferred to add hydrosilation reaction inhibitors in an amount of 0.0001 to 10 parts by weight, preferably 0.001 to 5 parts by weight, per 100 parts by weight of the sum of components (A1) to (A3), or per 100 parts by weight of the sum of components (A1) to (A4).

The curable silicone resin composition (A) may further contain iron oxide, ferrocene, cerium oxide, cerium polysiloxane, or other heat-resistant agents and pigments. For improving the mechanical properties of the cured product, the composition (A) may contain an inorganic filler such as fumed silica, precipitated silica, titanium dioxide, carbon black, alumina, quartz powder, or such inorganic fillers that have been subjected to a hydrophobic surface treatment with an organoalkoxysilane, organochlorosilane, organosilazane, or other organic silicon compound. When it is required that the cured body be transparent, the inorganic fillers should be added in amounts that do not inhibit transparency. Furthermore, the composition may incorporate pigments, titanium oxide, YAG fluorescent substances, or similar fluorescent pigments. Other optional additives that may be included are tetramethoxysilane, tetraethoxysilane, dimethyldimethoxysilane, methylphenyldimethoxysilane, methylphenyldiethoxysiolane, phenyltrimethoxysilane, methyltrimethoxysilane, methyltriethoxysilane, vinyltrimethoxysilane, allyltrimethoxysilane, allyltriethoxysilane, or other alkoxysilanes.

Curable silicone resin composition (A) is prepared by uniformly mixing components (A1) to (A3), or components (A1) to (A4), if necessary, with addition of other optional components. Composition (A) can be prepared with a mixer such as a Ross mixer, planetary mixer, or Hobart mixer.

If the curable silicone resin composition (A) does not contain a hydrosilation-reaction inhibitor, curing can be carried out by maintaining it at room temperature. In the composition (A) contains a hydrosilation-reaction inhibitor, curing can be accelerated by heating. There are no limitations with regard to a curing temperature. For example, curing can be carried out at a temperature within the range of 30 to 350 °C, preferably from 100 to 200 °C. The hardness of the cured body measured with a Type D durometer according to Japanese Industrial Standard K7215, should be within the range of 40 to 90, preferably 50 to 85.

Resin composition (B) is a curable epoxy resin composition that is crosslinked and cured via condensation crosslinking reaction between epoxy groups of component (B1) and component (B2) in the presence of component (B3).

Component (B1) is an epoxy resin that contains at least two epoxy groups in one molecule. This may be e.g., bisphenol A-type epoxy resin, bisphenol F-type epoxy resin, phenolnovolac-type epoxy resin, alicyclic-type epoxy resin, hydrogenerated bisphenol A-type epoxy resin, epoxy resin with an alicyclic skeleton, an aliphatic-type epoxy resin, spirocyclic epoxy resin, and glycidolether-type epoxy resin. Such a component (B1) is available as a commercial product that can be obtained from Daicel Chemical Industries (Celoxide 2021, Celoxide 2080, Celoxide 3000, Epolead GT300, Epolead GT400, and EHPE-3150).

Component (B2) is a curing agent that participates in a condensation crosslinking reaction with epoxy groups of component (B1). This may be, e.g., anhydrous phthalic acid, anhydrous maleic acid, anhydrous pyromellitic acid, or derivatives of the above acids. Such a component (B2) is available as a commercial product that can be obtained from Shin-Nihon Rika Co., Ltd. (Rikacid MH-700, MH-500, MTA-10, MTA-15, HNA, HNA-100, etc.). Component (B2) is used in an amount of 10 to 200 parts by weight per 100 parts by weight of component (B1). If used in an amount of less than 10 parts by weight, a cured epoxy resin will not have a sufficient hardness. If, on the other hand, used in an amount of exceeding 200 parts by weight, the cured epoxy resin will not have sufficient hardness because of a large amount of low-viscosity hardening agent remaining in the cured epoxy resin.

Component (B3) is the catalyst that promotes condensation crosslinking reaction between epoxy groups of component (B1) and component (B2). Examples of this catalyst are the following: N,N-dimethylbenzylamine, N,N-dimethylaniline, 1,5-diazabicyclo (4,3,0) nonen-5,1,8-diazabicyclo (5,4,0)-undecen-7, or similar amino compounds. Component (B3) is used in an amount of 0.001 to 10 parts by weight per 100 parts by weight of constituent (B1). If used in an amount of less than 0.001 parts by weight, this will delay the time of curing of the epoxy resin composition (B). Use of the catalyst in an amount exceeding 10 parts by weight will not essentially accelerate the curing but will be economically unjustifiable.

The curable epoxy resin composition (B) is prepared by mixing components (B1) and (B2) with heating, and then uniformly mixing the obtained mixture with component (B3). Mixing devices suitable for the preparation of the composition (B) may be a Ross mixer, planetary mixer, or Hobart mixer.

A bonded composite of a silicone resin and an epoxy resin can be produced by curing either one of said curable silicone resin composition (A) or said curable epoxy resin composition (B) at room temperature or with heating and then loading the other of said compositions into tight contact with each other and curing the non-cured part at room temperature or with heating. Alternatively, a curable silicone resin composition (A) and a curable epoxy resin composition (B) can be loaded into tight contact with each other and then cured therewith at room temperature or with heating.

Depending on the viscosity of each composition, a method of molding can be freely selected from casting molding, compression molding, extrusion molding, transfer molding etc. When one of said curable resin compositions (A) or said curable epoxy resin composition (B) is cured to form a primary molded body and then another one is loaded in tight contact with each other and cured therewith, it is not necessary for the primary molded body to be cured to the final degree. Then, it is sufficient only to form a interface between the both compositions enough to separate the non-cured parts from the primary curing parts. Depending on a desired shape of the bonded composite of a silicone resin and a epoxy resin, there are no limitations with regard to the shape of the resulting product. It can be in the form of a film, sheet, tape, block, rod, or tube.

Manufacturing a bonded composite of the invention by compression molding can be carried out, e.g., by the following specific method. One of A curable silicone resin composition (A) or an curable epoxy resin composition (B) is loaded into a mold and is cured for 15 min. to 1 hour, at a temperature of 150°C to 200°C, and at a pressure of 5 to 20 MPa to form a cured resin body. The obtained resin body is extracted from the mold, cut to required dimensions and returned to the mold. Then, another curable resin composition is loaded into the space left in the mold and cured with heating for 15 min. to 1 hour, at a temperature of 150°C to 200°C, at a pressure of 5 to 20 MPa to form a bonded composite of both resins. Properties of the bonded composite of both resins obtained after the second molding will not depend on which one of components (A) or (B) was molded first.

### Examples

Practical examples and comparative examples are provided herein below in order to specifically explain the present invention. The present invention, however, is not limited to these practical examples. In all of the following practical examples and comparative examples, the parts are to be understood as meaning parts by weight. The values of the viscosities were measured at 25 °C. The values of the weight-average molecular weight were measured by gel-permeation chromatography (GPC) and recalculated for polystyrene as the standard. The hardness of the body obtained by curing the curable silicone resin composition (A) was determined with a Type D durometer in compliance with Japanese Industrial Standard K 7215-1986. This JIS is a standard test method for determining the durometer hardness of plastics. In the examples, Ph is used to designate phenyl, Me designates methyl, and Vi designates vinyl. Refractory indices of polyphenylmethylhexenylsiloxane resins given in reference examples are measured by means of a refractometer at 25°C.

### Reference Example 1

A mixture was prepared by combining;
153 gram of a polyphenylmethylhexenylsiloxane resin represented by the following average molecular formula:

(PhSiO_{3/2})₇₄ (Me2SiO_{2/2})₆ (HexMeSiO₂ₗ₂)₂₀

which was solid at room temperature, having a weight-average molecular weight of 3300, a refractory index of 1.507,
43 gram of a cyclic polyethylmethylhydrogensiloxane represented by the following formula:, 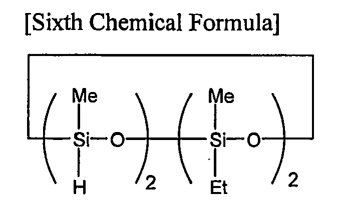 0.2 gram of 2-phenyl-3-buty-2-ol,
and 2 gram of a product of a condensation reaction between γ - glycidoxypropyltrimethoxysilane and polysiloxane (having a viscosity of 17 mPa·s) represented by the following formula: 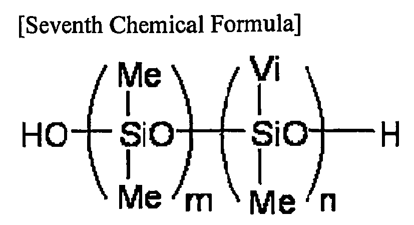 (wherein m=4 and n=2)
The mixture was stirred for 1 hour at 80-90°C, cooled to room temperature and mixed with a mixture of 0.02 gram (4 wt. % of platinum metal) of 1,3-divinyl-1,1,3,3-tetramethyldisiloxane- platinum complex and 2.0 gram of cyclic polymethylvinylsiloxane(having a viscosity of 4 mPa·s) represented by the following formula: 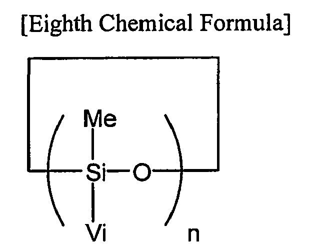 (wherein n is a number between 4 and 5)
As a result, the curable silicone resin composition was obtained.
200 gram of the obtained silicone resin composition was loaded into a mold and the composition was press-molded at 150 °C for 15 minutes at a pressure of 10 MPa, to form a cured body of silicone resin. The obtained silicone resin had a Type D durometer hardness of 67.

### Reference Example 2

A mixture was prepared by combining;
140 gram of a polyphenylmethylhexenylsiloxane resin represented by the following average molecular formula:

(PhSiO_{3/2})₇₄(Me₂SiO_{2/2})₆(HexMeSiO_{2/2})₂₀

which was solid at room temperature, having a weight-average molecular weight of 3300, a refractory index of 1.507,
25 gram of a cyclic polyethylmethylhydrogensiloxane represented by the following formula:, 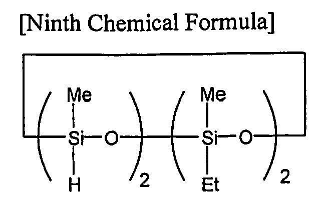 25 gram of cyclic polyethylmethylhydrogensiloxane represented by the following formula:

(PhSiO_{3/2})₆ (HMe₂SiO_{1/2})₄

having a weight-average molecular weight of 1100,
0.2 gram of 2-phenyl-3-buty-2-ol,
and 2 gram of a product of a condensation reaction between γ - glycidoxypropyltrimethoxysilane and polysiloxane (having a viscosity of 17 mPa·s) represented by the following formula : 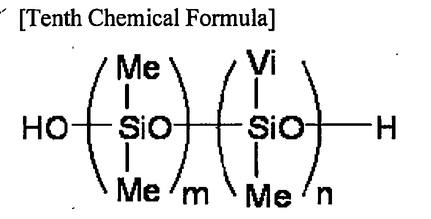 (wherein m=4 and n=2)
The mixture was stirred for 1 hour at 80 to 90°C, cooled to room temperature, and mixed with a mixture of 0.02 gram (4 wt. % of platinum metal) of 1,3-divinyl-1,1,3,3-tetramethyldisiloxane- platinum complex and 2.0 gram of cyclic polymethylvinylsiloxane(having a viscosity of 4 mPa·s) represented by the following formula: 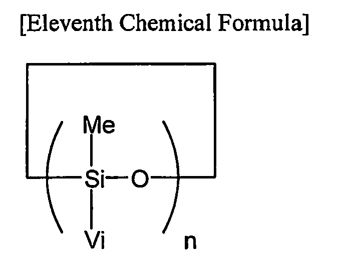 (wherein n is a number between 4 and 5)
As a result, the curable silicone resin composition was obtained.
200 gram of the obtained silicone resin composition was loaded into a mold and the composition was press-molded at 150 °C for 15 minutes at a pressure of 10 MPa, to form a cured body of silicone resin. The obtained silicone resin had a Type D durometer hardness of 70.

### Reference Example 3

A mixture was prepared by combining;
43 gram of polymethylvinylsiloxane resin represented by the following average molecular formula:

(SiO_{4/2})₆₀(ViMe₂SiO_{1/2})₁₄₀

which was solid at room temperature, having a weight-average molecular weight of 5000,
86 gram of polymethylvinylsiloxane resin (having a viscosity of 450 mPa·s) represented by the following average molecular formula:

ViMe₂SiO(Me₂SiO_{2/2})₁₃₃SiMe₂Vi,

26 gram of polymethylvinylsiloxane resin (having a viscosity of 100 mPa·s) represented by the following average molecular formula:

ViMe₂SiO(Me₂SiO_{2/2})₆₅SiMe₂Vi,

14.5 gram of polymethylhydrogensiloxane represented by the following molecular formula:

Me₃SiO(Me₂SiO_{2/2})₃(MeHSiO_{2/2})₅SiMe₃,

1.7 gram of a product of a condensation reaction between γ - glycidoxypropyltrimethoxysilane and polysiloxane (having a viscosity of 17 mPa·s) represented by the following formula : 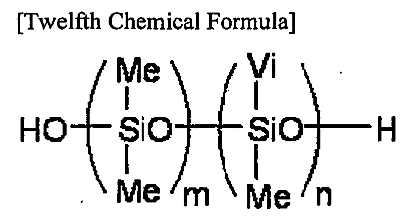 (wherein m=4 and n=2),
8.7 gram of a mixture of 0.174 gram of 1-ethynyl-1-cyclohexenol and 8.526 gram of polymethylvinylsiloxane (having a viscosity of 9700 mPa·s) represented by the following average molecular formula:

ViMe₂SiO(Me₂SiO_{2/2})₄₀₃SiMe₂Vi,

and 0.035 gram (4 wt. % of platinum metal) of 1,3-divinyl-1,1,3,3-tetramethyldisiloxane-platinum complex.
As a result, the curable silicone resin composition was obtained.
180 gram of the obtained silicone resin composition was loaded into a mold and the composition was press-molded at 150 °C for 15 minutes at a pressure of 10 MPa, to form a cured body of silicone resin. The obtained silicone resin had a Type D durometer hardness of 45.

### Reference Example 4

85 gram of an epoxy resin containing an alicyclic skeleton, EHPE-3150(Daicel Chemical Industries) was loaded into a flask, heated to 85 to 90°C, and mixed with 79 gram of an acid anhydride curing agent, Rikacid MH-700(Shin-nihon Chemical Co., Ltd.). After cooling to room temperature, the contents were combined and mixed with 0.8 gram ofN,N-dimethylbenzylamine to obtain 164.8 gram of a curable epoxy resin composition.

### Practical Example 1

The cured body of silicone resin obtained in Reference Example 1 was placed into the half space of a mold, and the remaining half space was loaded with a liquid curable epoxy resin composition obtained in Reference Example 4. The contents were press-molded at 150 °C for 15 minutes at a pressure of 10 MPa, to form a bonded composite of silicone resin and epoxy resin. Manual stretching of the obtained silicone-epoxy composite showed that both parts were firmly attached.

### Practical Example 2

The cured body of silicone resin obtained in Reference Example 2 was placed into the half space of a mold, and the remaining half space was loaded with a liquid curable epoxy resin composition obtained in Reference Example 4. The contents were press-molded at 150 °C for 15 minutes at a pressure of 10 MPa, to form a bonded composite of silicone resin and epoxy resin. Manual stretching of the obtained silicone-epoxy composite showed that both parts were firmly attached.

### Comparative Example 1

The cured body of silicone resin obtained in Reference Example 3 was placed into the half space of a mold, and the remaining half space was loaded with a liquid curable epoxy resin composition obtained in Reference Example 4. The contents were press-molded at 150 °C for 15 minutes at a pressure of 10 MPa, to form a bonded composite of silicone resin and epoxy resin. Manual stretching of the obtained silicone-epoxy composite showed that both parts could be easily separated at their interface.

## Claims

1. A bonded composite of a silicone resin and an epoxy resin comprising:
(A) a curable silicone resin composition comprising:
100 parts by weight of (A1) an organopolysiloxane resin that has a refractory index at 25°C within the range of 1.45 to 1.60 and contains at least two silicon-bonded alkenyl groups having 2 to 12 carbon atoms, and no less than 30 mole percent of total siloxane units is phenylsiloxane units represented by the following formula: C₆H₅-SiO_{3/2}, (A2) an organopolysiloxane that contains at least two silicon-bonded hydrogen atoms in an amount such that the ratio of the mole number of silicon-bonded hydrogen atoms of (A2) to the mole number of alkenyl groups in (A1) is within the range of 0.1 to 3.0, and (A3) hydrosilylation catalyst, and
(B) a curable epoxy resin composition comprising:
100 parts by weight of (B1) an epoxy resin that contains at least two epoxy groups in one molecule,
10 to 200 parts by weight of (B2) a curing agent, and
0.001 to 10 parts by weight of (B3) a curing catalyst.

2. A bonded composite of a silicone resin and an epoxy resin according to claim 1 comprising:
100 parts by weight of (A1) an organopolysiloxane resin that has a refractory index at 25°C within the range of 1.45 to 1.60 and contains at least two silicon-bonded alkenyl groups having 2 to 12 carbon atoms, and no less than 30 mole percent of total siloxane units is phenylsiloxane units represented by the following formula: C₆H₅-SiO_{3/2}, (A2) an organopolysiloxane that contains at least two silicon-bonded hydrogen atoms in an amount such that the ratio of the mole number of silicon-bonded hydrogen atoms of (A2) to the mole number of alkenyl groups in (A1) is within the range of 0.1 to 3.0, (A3) hydrosilylation catalyst, and
0.1 to 10 parts by weight of (A4) a polyorganosiloxane that contains at least two silicon-bonded alkenyl groups, at least one group of formula OR¹, where R¹ is an hydrogen atom or a univalent hydrocarbon group having one to three carbon atoms, and at least one group selected from epoxy group, methacryloxy group, or acryloxy group, and (B) a curable epoxy resin composition comprising:
100 parts by weight of (B1) an epoxy resin that contains at least two epoxy groups in one molecule,
10 to 200 parts by weight of (B2) a curing agent, and
0.001 to 10 parts by weight of (B3) a curing catalyst.

3. The bonded composite of a silicone resin and an epoxy resin according to claim 1 or claim 2 wherein the number of said silicon-bonded alkenyl groups of component (A1) is three or more and wherein the number of carbon atoms of the alkenyl group is 3 to 12.

4. The bonded composite of a silicone resin and an epoxy resin according to any of claim 1 to claim 3 wherein the Type D durometer hardness in compliance with Japanese Industrial Standard K 7215 of the cured body of said curable silicone resin composition (A) is equal to or exceeds 40.

5. A method for manufacturing the bonded composite of a silicone resin and an epoxy resin according to claim 1 or claim 2, wherein either one of said curable silicone resin composition (A) or said curable epoxy resin composition (B) is cured at room temperature or with heating and then the other of said compositions is loaded in tight contact with each other and cured at room temperature or with heating.

6. A method for manufacturing the bonded composite of a silicone resin and an epoxy resin according to claim 1 or claim 2, wherein said curable silicone resin composition (A) and said curable epoxy resin composition (B) are loaded in tight contact with each other and cured together at room temperature or with heating.

## Patentansprüche

1. Ein verklebter Verbundstoff eines Siliconharzes und eines Epoxyharzes, umfassend:
(A) eine härtbare Siliconharzzusammensetzung, enthaltend:
100 Gewichtsteile (A1) eines Organopolysiloxanharzes, das einen Feuerbeständigkeitsindex bei 25°C innerhalb des Bereiches von 1,45 bis 1,60 hat und wenigstens zwei siliciumgebundene Alkenylgruppen mit 2 bis 12 Kohlenstoffatomen enthält, und nicht weniger als 30 Mol-% der gesamten Siloxaneinheiten Phenylsiloxaneinheiten, dargestellt durch die folgende Formel: C₆H₅-SiO_{3/2} sind, (A2) ein Organopolysiloxan, das wenigstens zwei siliciumgebundene Wasserstoffatome in einer Menge enthält, so dass das Verhältnis der Molzahl von siliciumgebundenen Wasserstoffatomen von (A2) zu der Molzahl der Alkenylgruppen in (A1) innerhalb des Bereiches von 0,1 bis 3,0 ist, und (A3) einen Hydrosilylierungskatalysator, und
(B) eine härtbare Epoxyharzzusammensetzung, enthaltend:
100 Gewichtsteile (B1) eines Epoxyharzes, das wenigstens zwei Epoxygruppen in einem Molekül enthält,
10 bis 200 Gewichtsteile (B2) eines Härtungsmittels und
0,001 bis 10 Gewichtsteile (B3) eines Härtungskatalysators.

2. Ein verklebter Verbundstoff eines Siliconharzes und eines Epoxyharzes gemäß Anspruch 1, umfassend:
100 Gewichtsteile (A1) eines Organopolysilaxanharzes, das einen Feuerbeständigkeitsindex bei 25°C innerhalb des Bereiches von 1,45 bis 1,60 hat und wenigstens zwei siliciumgebundene Alkenylgruppen mit 2 bis 12 Kohlenstoffatomen enthält, und nicht weniger als 30 Mol-% der gesamten Siloxaneinheiten Phenylsiloxaneinheiten, dargestellt durch die folgende Formel: C₆H₅-SiO_{3/2}, sind,
(A2) ein Organopolysiloxan, das wenigstens zwei siliciumgebundene Wasserstoffatome in einer Menge enthält, so dass das Verhältnis der Molzahl von siliciumgebundenen Wasserstoffatomen von (A2) zu der Molzahl von Alkenylgruppen in (A1) innerhalb des Bereiches von 0,1 bis 3,0 ist,
(A3) einen Hydrosilylierungskatalysator, und
0,1 bis 10 Gewichtsteile (A4) eines Polyorganosiloxans, das wenigstens zwei siliciumgebundene Alkenylgruppen, wenigstens eine Gruppe der Formel OR¹, wobei R¹ ein Wasserstoffatom oder eine einbindige Kohlenwasserstoffgruppe mit 1 bis 3 Kohlenstoffatomen ist, und wenigstens eine Gruppe, ausgewählt aus Epoxygruppe, Methacryloxygruppe oder Acryloxygruppe, enthält, und
(B) eine härtbare Epoxyharzzusammensetzung, enthaltend:
100 Gewichtsteile (B1) eines Epoxyharzes, das wenigstens zwei Epoxygruppen in einem Molekül enthält,
10 bis 200 Gewichtsteile (B2) eines Härtungsmittels und
0,001 bis 10 Gewichtsteile (B3) eines Härtungskatalysators.

3. Der verklebte Verbundstoff eines Siliconharzes und eines Epoxyharzes gemäß Anspruch 1 oder 2, wobei die Anzahl von siliciumgebundenen Alkenylgruppen der Komponente (A1) gleich drei oder mehr ist und wobei die Anzahl von Kohlenstoffatomen der Alkenylgruppe 3 bis 12 ist.

4. Der verklebte Verbundstoff eines Siliconharzes und eines Epoxyharzes gemäß einem der Ansprüche 1 bis 3, wobei die Typ D Durometerhärte in Übereinstimung mit dem Japanischen Industriestandard K 7215 des gehärteten Körpers dieser härtbaren Siliconharzzusammensetzung (A) gleich oder größer als 40 ist.

5. Ein Verfahren zur Herstellung des verklebten Verbundstoffs eines Siliconharzes und eines Epoxyharzes gemäß Anspruch 1 oder 2, wobei entweder die härtbare Silicanharzzusammensetzung (A) oder die härtbare Epoxyharzzusammensetzung (B) bei Raumtemperatur oder unter Erwärmung gehärtet wird und dann die andere der Zusammensetzungen in engen Kontakt mit der anderen aufgebracht wird und bei Raumtemperatur oder unter Erwärmung gehärtet wird.

6. Ein Verfahren zur Herstellung des verklebten Verbundstoffs eines Siliconharzes und eines Epoxyharzes gemäß Anspruch 1 oder 2, wobei die härtbare Siliconharzzusammensetzung (A) und die härtbare Epoxyharzzusammensetzung (B) in engen Kontakt miteinander gebracht werden und gleichzeitig bei Raumtemperatur oder unter Erwärmung gehärtet werden.

## Revendications

1. Composite collé d'une résine de silicone et d'une résine époxyde, comprenant :
(A) une composition de résine de silicone durcissable comprenant :
100 parties en poids de (A1) une résine d'organopolysiloxane qui a un indice de réfraction à 25°C compris dans la plage de 1,45 à 1,60 et contient au moins deux groupes alcényle liés à du silicium ayant 2 à 12 atomes de carbone, et pas moins de 30 pour cent en moles du total des unités siloxane sont des unités phénylsiloxane représentées par la formule suivante : C₆H₅-SiO_{3/2},
(A2) un organopolysiloxane qui contient au moins deux atomes d'hydrogène liés à du silicium en une quantité telle que le rapport entre le nombre de moles d'atomes d'hydrogène liés à du silicium de (A2) et le nombre de moles de groupes alcényle de (A1) soit compris dans la plage de 0,1 à 3,0, et
(A3) un catalyseur d'hydrosilylation, et
(B) une composition de résine époxyde durcissable comprenant :
100 parties en poids de (B1) une résine époxyde qui contient au moins deux groupes époxy dans une molécule,
10 à 200 parties en poids de (B2) un agent durcissant, et
0,001 à 10 parties en poids de (B3) un catalyseur de durcissement.

2. Composite collé d'une résine de silicone et d'une résine époxyde selon la revendication 1, comprenant :
100 parties en poids de (A1) une résine d'organopolysiloxane qui a un indice de réfraction à 25°C compris dans la plage de 1,45 à 1,60 et contient au moins deux groupes alcényle liés à du silicium ayant 2 à 12 atomes de carbone, et pas moins de 30 pour cent en moles du total des unités siloxane sont des unités phénylsiloxane représentées par la formule suivante : C₆H₅-SiO_{3/2},
(A2) un organopolysiloxane qui contient au moins deux atomes d'hydrogène liés à du silicium en une quantité telle que le rapport entre le nombre de moles d'atomes d'hydrogène liés à du silicium de (A2) et le nombre de moles de groupes alcényle de (A1) soit compris dans la plage de 0,1 à 3,0,
(A3) un catalyseur d'hydrosilylation, et
0,1 à 10 parties en poids de (A4) un polyorganosiloxane qui contient au moins deux groupes alcényle liés à du silicium, au moins un groupe de formule OR¹, où R¹ est un atome d'hydrogène ou un groupe hydrocarboné univalent ayant un à trois atomes de carbone, et au moins un groupe choisi parmi un groupe époxy, un groupe méthacryloxy ou un groupe acryloxy, et
(B) une composition de résine époxyde durcissable comprenant :
100 parties en poids de (B1) une résine époxyde qui contient au moins deux groupes époxy dans une molécule,
10 à 200 parties en poids de (B2) un agent durcissant, et
0,001 à 10 parties en poids de (B3) un catalyseur de durcissement.

3. Composite collé d'une résine de silicone et d'une résine époxyde selon la revendication 1 ou la revendication 2, dans lequel le nombre desdits groupes alcényle liés à du silicium du composant (A1) est d'au moins trois et dans lequel le nombre des atomes de carbone du groupe alcényle est de 3 à 12.

4. Composite collé d'une résine de silicone et d'une résine époxyde selon l'une quelconque des revendications 1 à 3, dans lequel la dureté mesurée sur duromètre de type D conformément à la norme industrielle japonaise K 7215 du corps durci de ladite composition de résine de silicone durcissable (A) est au moins égale à 40.

5. Procédé de fabrication du composite collé d'une résine de silicon et d'une résine époxyde selon la revendication 1 ou la revendication 2, dans lequel l'une desdites compositions, ladite composition de résine de silicone durcissable (A) ou ladite composition de résine époxyde durcissable (B), est durcie à température ambiante ou sous chauffage, puis l'autre desdites compositions est chargée en contact serré l'une avec l'autre et durcie à température ambiante ou sous chauffage.

6. Procédé de fabrication du composite collé d'une résine de silicone et d'une résine époxyde selon la revendication 1 ou la revendication 2, dans lequel ladite composition de résine de silicone durcissable (A) et ladite composition de résine époxyde durcissable (B) sont chargées en contact serré l'une avec l'autre et durcies ensemble à température ambiante ou sous chauffage.
